Europäisches Patentamt

European Patent Office

Office européen des brevets

(11) Veröffentlichungsnummer: **0 346 665 B1**

(12) **EUROPÄISCHE PATENTSCHRIFT**

(19)

(45) Veröffentlichungstag der Patentschrift: **01.09.93**

(21) Anmeldenummer: **89109574.7**

(22) Anmeldetag: **27.05.89**

(51) Int. Cl.⁵: **H05B 39/09**

(54) **Schaltungsanordnung zum Betreiben einer pulsmodulierten Infrarot-Strahlungsquelle.**

(30) Priorität: **11.06.88 DE 3819987**

(43) Veröffentlichungstag der Anmeldung:
**20.12.89 Patentblatt 89/51**

(45) Bekanntmachung des Hinweises auf die
Patenterteilung:
**01.09.93 Patentblatt 93/35**

(84) Benannte Vertragsstaaten:
**DE FR GB NL**

(56) Entgegenhaltungen:
**EP-A- 0 058 105**    **EP-A- 0 198 573**
**WO-A-88/04152**    **DD-A- 254 832**
**DE-A- 3 043 332**    **GB-A- 1 600 117**
**SU-A- 1 035 483**    **US-A- 4 160 246**

(73) Patentinhaber: **Drägerwerk Aktiengesellschaft**

**D-23542 Lübeck(DE)**

(72) Erfinder: **Matthiessen, Hans**
**Heischbrok 22**
**D-2407 Gross Parin(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

EP 0 346 665 B1

**Beschreibung**

Die Erfindung betrifft ein Verfahren und eine Schaltungsanordnung für eine pulsmodulierte Leistungszufuhr an eine Infrarot-Strahlungsquelle, deren Strahlung von einem Empfänger erfaßbar ist.

Derartige pulsbetriebene Infrarot-Strahlungsquellen werden vielfach dazu benutzt, mit Hilfe einer Küvettenanordnung, in welcher sich eine zu untersuchende Gasprobe befindet, die Konzentration von Komponenten der Gasprobe zu bestimmen. Dabei ist die Strahlungsquelle an einen über einen Zeitgeber betriebenen Pulsgenerator angeschlossen, durch den die Versorgungsspannung der Strahlungsquelle entsprechend den Pulstakten an- und ausgeschaltet wird. Die Infrarot-Strahlungsimpulse durchdringen die Meßküvette, wobei je nach Konzentration der nachzuweisenden Gaskomponente mehr oder weniger Strahlungsenergie absorbiert wird. Die nicht absorbierte Strahlungsenergie gelangt in eine Empfängerkammer, in welcher das Nutzsignal einer weiteren Auswertung unterzogen wird. Das Modulationsprinzip wird deswegen angewandt, damit die Meßstrahlung von störenden Schwankungen der Strahlungsintensität deutlich unterschieden werden kann. Dadurch wird ein besseres Signal-/Rauschverhältnis erzielt (DE-OS 30 43 332).

Bei der bekannten Schaltungsanordnung folgt jedoch der zeitliche Verlauf des Meßsignals nicht nur den Absorptionsschwankungen entsprechend der Konzentrationsänderungen in der Meßküvette, sondern der Signalverlauf wird durch die Aufheiz- und Abkühlcharakteristik der Strahlungsquelle bestimmt, welche wiederum von der Impulsleistung sowie dem Tastverhältnis der Impulsreihen abhängig ist. Deshalb muß mit einem aufwendigen Signalverarbeitungsverfahren jeweils das Signalmaximum und das Signalminimum aus einer unsymmetrisch verlaufenden Signalform herausgefiltert werden. Außerdem sind die mit der bekannten Intensitätsmodulation betriebenen Strahlungsquellen langsam und ihre Strahlungsintensität ist von der Umgebungstemperatur abhängig, da die Spitzentemperatur und auch die Aufheiz- und Abkühlzeitkonstanten von der Wärmeabfuhr an die Umgebung beeinflußt werden.

Der vorliegenden Erfindung liegt somit die Aufgabe zugrunde, eine Schaltungsanordnung der genannten Art so zu verbessern, daß die Strahlungsquelle möglichst unabhängig von ihrer Strahlungscharakteristik sowie ihren thermischen Eigenschaften und unbeeinflußt von Umgebungsbedingungen ein schnelles und leicht zu verarbeitendes Meßsignal an den Empfänger abgeben kann.

Die Lösung der Aufgabe erfolgt dadurch, daß die Leistungszufuhr durch eine Regeleinheit während der Impulsdauer entsprechend einen oberen Temperatur-Sollwert $T_o$ und während der Impulspause entsprechend einen unteren Temperatur-Sollwert $T_u$ regelbar ist, wobei der Wechsel zwischen den beiden Sollwerten durch einen an die Sollwerteingabe der Regeleinheit angeschlossenen Impulsgeber auslösbar ist.

Die Vorteile der Erfindung liegen im wesentlichen darin, daß nach Ablauf der Anstiegszeit bzw. Abklingzeit der Leistungszufuhrimpulse stabile, von der Umgebungstemperatur und den Strahlercharakteristiken weitgehend unabhängige Strahlertemperaturen vorliegen. Das entsprechend der vom Strahler ausgesandten Intensität empfangene Meßsignal ist dadurch leicht zu verarbeiten und steht nach äußerst kurzen Einschwingzeiten schnell zur Verfügung.

Die Leistungszufuhr kann im Anfang so hoch sein, daß die durch den oberen Sollwert vorgegebene Temperatur mit einer steilen Anstiegsflanke erreicht wird, wonach eine geringere Leistungszufuhr zur Aufrechterhaltung des Sollwertes während des Regelplateaus ausreicht.

Entsprechend kann beim Abschalten des Strahlers auf den unteren Sollwert zunächst die Leistungszufuhr gänzlich unterbrochen, und nach Erreichen des unteren Sollwertes auf dem unteren Regelplateau gehalten werden, wobei nur noch eine geringe Leistungszufuhr notwendig ist.

Zweckmäßigerweise ist die Strahlungsquelle als ein temperaturabhängiger Widerstand im Meßzweig einer Brückenschaltung angeordnet, deren Referenzzweig einen durch eine Impulsschalter zuschaltbaren Zusatzwiderstand enthält und deren Nullzweig an die Eingänge eines Operationsverstärkers angeschlossen ist, dessen Ausgang in einer geschlossenen Regelschleife mit der Strahlungsquelle verbunden ist.

Durch die Wahl eines temperaturabhängigen Widerstandes als Strahlungsquelle wird der für den Regelkreis notwendige Fühler zur Eingabe des Temperatur-Istwertes gebildet.

Die obere Leistungsaufnahme des Strahlers ist durch seinen temperaturabhängigen Widerstand begrenzt, so daß nunmehr nur zu Anfang der Aufheizzeit die maximal verfügbare Energie eingespeist werden kann, so daß eine schnelle Aufheizzeit ermöglicht wird. Eine Zerstörung des Strahlers durch eine zu hohe andauernde Leistungszufuhr wird dadurch vermieden. Die durch die aktive Widerstandsregelbrücke einspeisbare Heizleistung ist durch die Wahl der Widerstände in dem Referenzzweig festgelegt: Bei zugeschaltetem Zusatzwiderstand erhöht sich der Brückenwiderstand an dem einen der Eingänge des Operationsverstärkers, so daß die Spannungsdifferenz im Nullzweig erhöht wird. Als Folge dieser Verstimmung der Brückenschaltung wird die Strahlungsquelle durch den Operationsverstärker mit einer erhöhten Leistung versorgt, bis der Widerstandswert der aufgeheizten Strahlungsquelle wieder zum Brückenabgleich führt.

2

Damit ist ein oberer Regel-Sollwert $T_o$ für die maximale Strahlungsleistung der Strahlungsquelle festgelegt. Bei ausgeschaltetem Zusatzwiderstand sinkt die Strahlungstemperatur so weit ab, bis wieder ein Nullabgleich der Brückenschaltung bei einem unteren Regel-Sollwert $T_u$ der Strahlungsheizleistung erreicht worden ist. Dieser untere Wert muß nicht die Umgebungstemperatur sein, sondern braucht sich nur in genügendem Abstand zu der Temperatur bei maximaler Strahlungsleistung zu befinden, damit bei einem Abkühlen eine genügend hohe Flankensteilheit des Signalverlaufs erreicht wird. Die Zuschaltdauer des Zusatzwiderstandes bestimmt die Länge des Regelplateaus.Durch die Leistungsnachführung des Operationsverstärkers wird ein schnelles Ansteigen von dem unteren Regelwert $T_u$ auf den oberen Regelwert $T_o$ der Strahlungstemperatur ermöglicht.

Zur weiteren Verkürzung der Anstiegszeit beim Wechsel von der unteren Regeltemperatur $T_u$ auf die obere Regeltemperatur $T_o$ ist vorgesehen, den Ausgang des Operationsverstärkers über einen Transistorschalter an die zum Betreiben der Strahlungsquelle notwendige Versorgungsspannung anzuschließen. Bei Durchschaltung des Transistors liegt somit die volle zur Verfügung stehende Leistung an dem Strahler an, so daß in möglichst kurzer Zeit das stabile obere Temperaturplateau der Strahlungsintensität erreicht wird.

Werden die Widerstände für die Sollwerte verstellbar ausgeführt, sind der obere und untere Regel-Sollwert einstellbar. Der Impulsschalter wird als ein Feldeffekttransistor ausgebildet, dessen Source und Drain den Zusatzwiderstand überbrücken. Die Basis des Feldeffekttransistors ist dann an einen Impulsgenerator angeschlossen, dessen Impulsfolge den Zusatzwiderstand zyklisch zu- bzw. abschaltet, so daß die Strahlungsquelle in ihrer Heizleistung entsprechend folgt. Durch geeignete Wahl des Puls-Pausen-Verhältnisses kann die Dauer der stabilen Plateauphasen während der unteren Regeltemperatur $T_u$ und der oberen Regeltemperatur $T_o$ je nach Anforderung gewählt werden.

Die Vorteile der Schaltung, bei der der Ausgang des Operationsverstärkers über den Transistorschalter an die Versorgungsspannung angeschlossen ist, können wie folgt dargestellt werden: Während der Aufheizphase von dem unteren Regelwert $T_u$ zum oberen Regelwert $T_o$ liegt wegen der Übersteuerung der Regelung die volle Betriebsspannung an der Brücke an, so daß die Strahlungsquelle mit maximaler Geschwindigkeit ihre obere Regeltemperatur erreicht. Ist dies der Fall, so schaltet die Regelung sofort auf diejenige Brückenspannung zurück, die ausreichend ist, um den Strahler auf dem oberen Temperaturregelwert $T_o$ zu halten. Die Gefahr einer Überhitzung oder Zerstörung des Strahlers besteht dabei nicht mehr, wie es bei einer ungeregelten Ansteuerung eines Strahlers mit überhöhten Strom- bzw. Spannungsimpulsen der Fall sein kann. Nach Erreichen sowohl des oberen Regelwertes $T_o$ als auch des unteren Regelwertes $T_u$ ist die Strahlungsleistung konstant und unabhängig von der Umgebungstemperatur, so daß eine sehr stabile Infrarot-Strahlungsquelle verwirklicht ist. Dabei sind Einflüsse aus der Umgebung auf einfache Weise ausgeglichen. Nach der Umschaltung von dem oberen Regelwert $T_o$ auf den unteren Regelwert $T_u$ wird bei der angegebenen Schaltungsanordnung wiederum ein kurzer Flankenverlauf erreicht, da durch die Übersteuerung der Regelung nunmehr der Brückenstrom vollständig ausgeschaltet wird. Nach Erreichen des unteren Regelwertes $T_u$ wird die Brückenspannung dann automatisch auf einen solchen Wert gesteuert, der ausreichend ist, den Strahler bei der unteren Temperatur stabil zu halten.

Zur weiteren Auswertung des vom Empfänger empfangenen Signals ist vorgesehen, daß er über einen nachgeschalteten Verstärker an eine Abtastvorrichtung angeschlossen ist, welche das empfangene Signal in der Weise abtastet, daß bei Erreichen des stabilen Zustandes beim oberen Regelwert $T_o$ ein Meßsignal $S_o$ - (i) und bei Erreichen des unteren Regelwertes $T_u$ ein Meßsignal $S_u$ (i) aufgenommen und verarbeitet wird. In den jeweiligen stabilen Regelzuständen können dann eine Reihe i von Signalen $S_o$ (i) und $S_u$ (i) gesammelt, aufsummiert und zu einem Modulationsmeßwert $M_w$ durch Differenzbildung der beiden Summen gewonnen werden:

$$M_w = 1/n \sum_{i=1}^{n} S_o(i) - 1/n \sum_{i=1}^{n} S_u(i)$$

Durch das schnelle Erreichen der stabilen Regelbereiche der Strahlungsquelle ist durch die Abtastvorrichtung leicht erkennbar, welche Signale $S_o$ (i) bzw. $S_u$ (i) zur Auswertung herangezogen werden sollen: Es braucht jeweils nur der nachfolgende Signalwert mit dem vorangegangenen verglichen zu werden und bei Unterschreitung einer vorgebbaren Differenzschwelle kann der so aufgenommene Signalwert der Verarbeitung zum Modulationsmeßwert zugeführt werden. Bei dieser günstigen Abtastung und Verarbeitung wird der Einfluß der Umgebungstemperatur vollständig beseitigt; dieser Einfluß ist nur noch in den Aufheiz- und Abkühlflanken des Signals von der Strahlungsquelle enthalten, welche jedoch vollständig eliminiert werden können, da sich die Meßwerterfassung nur noch auf die stabilen Plateauphasen beschränkt. Durch wiederholtes Erfassen der Modulationsmeßwerte in aufeinanderfolgenden Impulszyklen kann eine höhere Güte des Modulationsmeßwertes erreicht werden, da Rauscheinflüsse der Strahlungsquelle und der Umgebung weiter unterdrückt sind. Es ist dann ein gemittelter Modulationsmeßwert über mehrere Meßzyklen k errechenbar, der als

$$M_{w,k} = 1/k \sum_{m=1}^{m} M_{w,m}$$

gewonnen wird.

Ein Ausführungsbeispiel der Erfindung wird in der schematischen Zeichnung dargestellt und im folgenden näher erläutert.

Es zeigen

Figur 1 die Schaltungsanordnung zum impulsweisen Betreiben der Infrarotstrahlungsquelle,

Figur 2 ein Diagramm für den Signalverlauf am Empfänger.

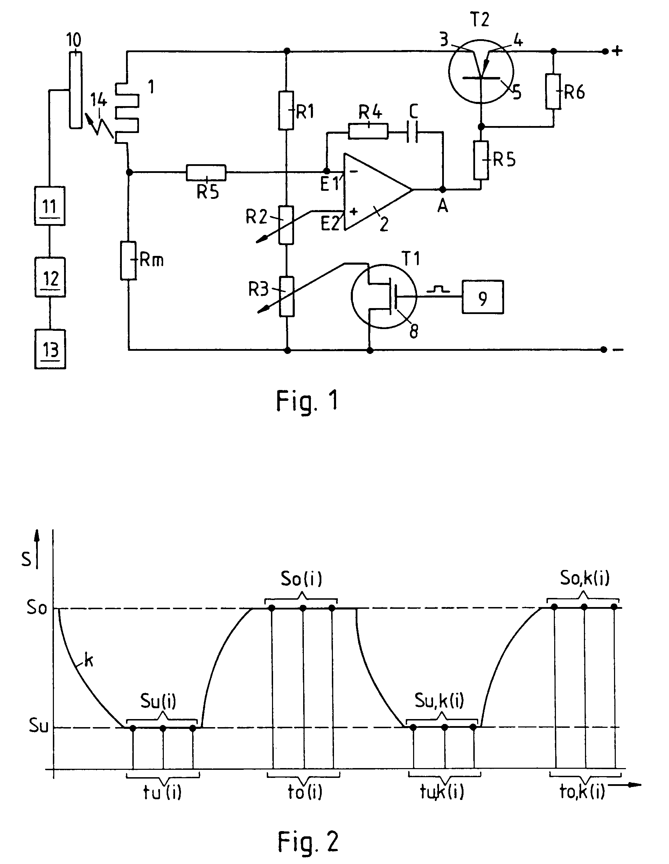

In Figur 1 ist eine Infrarotstrahlungsquelle (1) als ein temperaturabhängiger Widerstand in Brückenanordnung zu einem Meßwiderstand ($R_m$) im Meßzweig und zu einem Referenzwiderstand (R1) in Reihe mit zwei einstellbaren hintereinandergeschalteten Einstellwiderständen (R2, R3) im Referenzzweig angeordnet. Im Nullzweig sind die Eingänge (E1) (invertierend) und (E2) (nicht invertierend) eines Operationsverstärkers (2) einerseits über einen Vorwiderstand (R5) zwischen der Strahlungsquelle (1) und dem Meßwiderstand ($R_m$) bzw. andererseits an dem verstellbaren Abgriff des Einstellwiderstandes (R2) angeschlossen. Der Ausgang (A) und der Eingang (E1) des Operationsverstärkers (2) sind über ein RC-Glied (R4,C) verbunden. Am Ausgang (A) liegt über einen Basiswiderstand (R5) die Basis (5) eines Transistorschalters (T2), dessen Kollektor (3) an die Strahlungsquelle (1) und dessen Emitter (4) an die positive Versorgungsspannung angeschlossen ist. Emitter (4) und Basis (5) sind über den Widerstand (R6) gekoppelt. Der im Spannungsteiler (R2, R3) vorgesehene Einstellwiderstand (R3) liegt parallel zu einem Feldeffekttransistor (T1), dessen Basis (8) an einen Impulsgenerator (9) angeschlossen ist. Der Strahlungsquelle (1) gegenüberliegend ist ein Empfänger (10), der über seinen Vorverstärker (11) an eine Abtastvorrichtung (12) und an eine nachfolgende Auswerte- und Anzeigeeinheit (13) angeschlossen ist.

In dem Diagramm nach Figur (2) sind die Signale S des Empfängers (10) gegenüber der Zeit aufgetragen. Der Kurvenverlauf (K) zeigt das Signal in Abhängigkeit von der impulsweise ausgesendeten Strahlungsleistung der Strahlungsquelle (1), dargestellt durch den gezackten Pfeil (14). Ein Abkühlen der Strahlungsquelle (1) auf ihren unteren Temperaturregelwert $T_u$ führt nach Erreichen des stabilen unteren Plateaus zu einer Serie von Meßsignalen $S_u$ (i) zu den Zeitpunkten $t_u$ (i). Nach Umschaltung der Heizleistung für die Strahlungsquelle (1) zur Erreichung des oberen Temperaturregelwertes $T_o$ sind am Empfänger (10) die Meßsignale $S_o$ (i) abgreifbar. Die Signalwerte $S_u(i)$ und $S_o(i)$ sind durch die Abtastvorrichtung (12) aufgenommen und der Auswerteeinheit (13) zugeführt. In dem Beispiel nach Figur 2 sind für jedes Plateau der unteren Regeltemperatur $T_u$ und der oberen Regeltemperatur $T_o$ jeweils drei Meßsignale $S_u(i)$ und $S_o(i)$ aufgenommen, welche jeweils summiert und die Summen nach Division durch die Zahl 3 voneinander subtrahiert werden. Das so gewonnene Ergebnis gibt einen Modulationsmeßwert für einen Impulszyklus. Dieser Meßvorgang kann für weitere Impulszyklen k wiederholt werden, und so fort. Je öfter die Bildung eines Modulationswertes wiederholt wird, um so genauer ist das Meßsignal aus dem störenden Untergrundrauschen unterscheidbar.

**Patentansprüche**

1. Verfahren für eine pulsmodulierte Leistungszufuhr an eine Infrarot-Strahlungsquelle (1), deren Strahlung von einem Empfänger (10) erfaßt wird, dadurch gekennzeichnet, daß die Leistungszufuhr an die Strahlungsquelle (1) durch eine Regeleinheit (2) während der Impulsdauer entsprechend einen oberen Temperatur-Sollwert ($T_o$) und während der Impulspause entsprechend einen unteren Temperatur-Sollwert ($T_u$) geregelt wird, und daß der Wechsel zwischen der Impulsdauer und der Impulspause durch einen Impulsgeber ($T_1$) ausgelöst wird, der an die Sollwerteingabe (E2) der Regeleinheit (2) angeschlossen ist.

2. Verfahren nach Anspruch 1, dadurch gekennzeichnet, daß der Empfänger (10) über einen nachgeschalteten Verstärker (11) an eine Abtastvorrichtung (12) für das von der Strahlungsquelle (1) empfangene Signal angeschlossen ist, in welcher der Signalverlauf abgetastet und bei Erreichen eines stabilen

Zustandes als Meßsignal $S_o(i)$ für die obere Impulsleistung und als Meßsignal $S_u(i)$ für die untere Impulsleistung in der Weise verarbeitet wird, daR durch gewichtete Differenzbildung der n summierten Signale $S_o(i)$ und $S_u(i)$ ein Modulationsmeßwert

$$M_W = 1/n \sum_{i=1}^{n} S_o(i) - 1/n \sum_{i=1}^{n} S_u(i)$$

errechnet wird.

3. Schaltungsanordnung für eine pulsmodulierte Leistungszufuhr an eine Infrarot-Strahlungsquelle (1), deren Strahlung von einem Empfänger (10) erfaßt wird, zur Durchführung des Verfahrens nach Anspruch 1 oder 2, dadurch gekennzeichent, daß die Strahlungsquelle als ein temperaturabhängiger Widerstand (1) im Meßzweig einer Brückenschaltung angeordnet ist, deren Referenzzweig einen durch einen Impulsschalter (T1) zuschaltbaren Zusatzwiderstand (R3) enthält und deren Nullzweig an die Eingänge (E1, E2) eines Operationsverstärkers (2) angeschlossen ist, dessen Ausgang (A) in einer geschlossenen Regelschleife mit der Strahlungsquelle (1) verbunden ist.

4. Schaltungsanordnung nach Anspruch 3, dadurch gekennzeichnet, daß der Ausgang (A) des Operationsverstärkers (2) über einen Transistorschalter (T2) an die zum Betreiben der Strahlungsquelle (1) notwendige Versorgungsspannung anschließbar ist.

5. Schaltungsanordnung nach Anspruch 4, dadurch gekennzeichnet, daß der Zusatzwiderstand (R3) von Source und Drain eines als Feldeffekttransistor ausgebildeten, mit seiner Basis (8) an einen Impulsgeber (9) angeschlossenen Impulsschalters (T1) überbrückt ist.

## Claims

1. A method for pulse-modulated power supply to an infrared radiation source (1), the radiation of which is detected by a receiver (10), characterised in that the power supply to the radiation source (1) is controlled by a control unit (2) during the pulse duration, corresponding to an upper desired tempera-ture value ($T_o$), and during the inter-pulse period, corresponding to a lower desired temperature value ($T_u$), and in that the change between the pulse duration and the inter-pulse period is triggered by a pulse generator ($T_1$) which is connected to the desired value input (E2) of the control unit (2).

2. A method according to claim 1, characterised in that the receiver (10) is connected by way of a downstream amplifier (11) to a scanning device (12) for the signal received by the radiation source (1), in which device the signal waveform is scanned and when a stable state is reached, is processed as measuring signal $S_o(i)$ for the upper pulse power and as measuring signal $S_u(i)$ for the lower pulse power in such a manner that through weighted difference formation of the n summed signals $S_o(i)$ and $S_u(i)$ a modulation measured value is calculated:

$$M_W = 1/n \sum_{i=1}^{n} S_o(i) - 1/n \sum_{i=1}^{n} S_u(i)$$

3. A circuit arrangement for a pulse-modulated power supply to an infrared radiation source (1), the radiation of which is detected by a receiver (10) for carrying out the method according to claim 1 or 2, characterised in that the radiation source is arranged as a temperature-dependent resistor (1) in the measuring branch of a bridge circuit, the reference branch of which contains an auxiliary receiver (R3) able to be connected by a pulse switch (T1), and the dead branch of which is connected to the inputs (E1,E2) of an operational amplifier (2), the output (A) of which is connected in a closed loop to the radiation source (1).

**4.** A circuit arrangement according to claim 3, characterised in that the output (A) of the operational amplifier (2) is able to be connected by way of a transistor switch (T2) to the supply voltage required for operating the radiation source (1).

**5.** A circuit arrangement according to claim 4, characterised in that the auxiliary resistor (R3) is bridged by the source and drain of a pulse switch (T1), formed as a field-effect transistor, and with its base (8) connected to a pulse generator.

**Revendications**

**1.** Procédé d'alimentation en puissance pulsée d'une source de rayonnement infrarouge (1), dont le rayonnement est capté par un récepteur (10), caractérisé en ce que l'alimentation en puissance de la source de rayonnement (1) est réglée par une unité de réglage (2) pendant la durée de l'impulsion de façon correspondante à une valeur théorique de température supérieure ($T_o$) et, pendant l'absence d'impulsion, de façon correspondante à une valeur théorique de température inférieure $T_u$, et en ce que le passage d'une impulsion à une absence d'impulsion est déclenché par un générateur d'impulsions (T1) branché sur l'entrée de valeurs théoriques (E2) de l'unité de réglage (2).

**2.** Procédé selon la revendication 1, caractérisé en ce que le récepteur (10) est raccordé, par un amplificateur (11) placé en aval, à un dispositif de détection (12) pour le signal reçu par la source de rayonnement (1), dans lequel le tracé du signal est détecté et, lorsqu'un état stable est atteint, est traité comme signal de mesure $S_o$ (i) pour la puissance d'impulsion supérieure et comme signal de mesure $S_u$(i) pour la puissance d'impulsion inférieure, de telle sorte que, par soustraction pondérée des n signaux additionnés $S_o$ (i) et $S_u$(i), on obtienne une valeur de mesure de modulation

$$M_w = 1/n \sum_{i=1}^{n} S_o (i) - 1/n \sum_{i=1}^{n} S_u (i)$$

**3.** Circuit d'alimentation en puissance pulsée d'une source de rayonnement infrarouge (1), dont le rayonnement est capté par un récepteur (10), destiné à mettre en oeuvre le procédé selon la revendication 1 ou 2, caractérisé en ce que la source de rayonnement, conformée en résistance (1) variable avec la température, est disposée dans la branche de mesure d'un circuit en pont, dont la branche de référence comporte une résistance supplémentaire (R3) pouvant être mise en circuit par un commutateur d'impulsions (T1), et dont la branche zéro est raccordée aux entrées (E1, E2) d'un amplificateur opérationnel (2), dont la sortie (A) est reliée à la source de rayonnement (1) selon une boucle de régulation fermée.

**4.** Circuit selon la revendication 3, caractérisé en ce que la sortie (A) de l'amplificateur opérationnel (2) peut être raccordée, par l'intermédiaire d'un commutateur à transistor (T2), a la tension d'alimentation nécessaire au fonctionnement de la source de rayonnement.

**5.** Circuit selon la revendication 4, caractérisé en ce que la résistance supplémentaire (R3) est shuntée par la source et le drain d'un commutateur d'impulsions (T1) conformé en transistor à effet de champ, relié par sa base (8) à un générateur d'impulsions (9).

Fig. 1

Fig. 2